# EUROPEAN PATENT APPLICATION

(11) **EP 4 510 337 A1**
(43) Date of publication of application: **19.02.2025**
(21) Application number: 22954515.7
(22) Date of filing: 11.08.2022
(51) Int. Cl.: H01M 50/244, H01M 50/204, H01M 50/271

(54) **SUPPORT ASSEMBLY, BATTERY BOX BODY, BATTERY AND ELECTRIC DEVICE**

(71) Applicant: Contemporary Amperex Technology Co., Limited, Ningde, Fujian 352100 (CN)
(72) Inventor: ZHAO, Pengbo, Ningde, Fujian 352100 (CN); WANG, Yong, Ningde, Fujian 352100 (CN); LIU, Ruidi, Ningde, Fujian 352100 (CN); WANG, Qing, Ningde, Fujian 352100 (CN); ZHANG, Wei, Ningde, Fujian 352100 (CN)
(74) Representative: Thoma, Michael
(86) International application number: PCT/CN2022/111824
(87) International publication number: WO 2024/031548

(57) **Abstract**

A support assembly, a battery box, a battery, and an electric device are disclosed. The support assembly includes: at least two plate layers (20a, 20b, 20c), where the at least two plate layers (20a, 20b, 20c) are stacked, and a separating space (g1, g2) is provided between adjacent ones of the at least two plate layers (20a, 20b, 20c); and a support structure (30) disposed in the separating space (g1, g2), where the support structure (30) includes a plurality of cavities (31), at least some of the cavities (31) extend along a first direction (r1), and the first direction (r1) intersects with opposite surfaces (S1, S2) of the adjacent plate layers.

## Description

### TECHNICAL FIELD

This disclosure relates to the field of battery technologies, and in particular, to a support assembly, a battery box, a battery, and an electric device.

### BACKGROUND

Secondary batteries, especially lithium-ion batteries, have the advantages such as high voltage, high specific energy density, long cycle life, environmental friendliness, wide operating temperature range, and low self-discharge. Therefore, they have been widely used in power devices of portable electronic devices and large-scale new energy electric vehicles, playing a significant role in addressing human environmental pollution and energy crisis. For batteries, boxes for accommodating battery cells need to be further improved.

### SUMMARY

According to an aspect of this disclosure, a support assembly is provided, including:
at least two plate layers, where the at least two plate layers are stacked, and a separating space is provided between adjacent ones of the at least two plate layers; and
a support structure disposed in the separating space, where the support structure includes a plurality of cavities, at least some of the cavities extend along a first direction, and the first direction intersects with opposite surfaces of the adjacent plate layers.

The plurality of cavities are provided in the separating space between the adjacent plate layers stacked, and at least some of the plurality of cavities extend along the first direction intersecting with the opposite surfaces of the adjacent plate layers, such that when withstanding an external pressure, the support assembly can provide reliable support for the plate layers by virtue of a material forming the cavities in the support structure. Moreover, the plurality of cavities can be distributed in a larger range in the separating space, reducing the weight of the support structure while improving the overall support effect of the support assembly, thereby lightening the support assembly.

In some embodiments, the first direction perpendicularly intersects with the opposite surfaces of the adjacent plate layers.

At least some of the plurality of cavities extend along the first direction perpendicularly intersecting with the opposite surfaces of the adjacent plate layers, such that the pressure bearing capacity of the support assembly can be increased to a greater extent, thereby facilitating further weight reduction or thickness reduction of the support assembly.

In some embodiments, the first direction intersects at an acute angle with both the opposite surfaces of the adjacent plate layers.

At least some of the plurality of cavities extend along the first direction intersecting at an acute angle with both the opposite surfaces of the adjacent plate layers, such that pressure bearing requirements of the support assembly can be satisfied, and a distribution range of the support assembly in the separating space can also be enlarged.

In some embodiments, the first direction intersects at an acute angle with one of the opposite surfaces of the adjacent plate layers and perpendicularly intersects with the other one of the opposite surfaces of the adjacent plate layers.

According to actual requirements in application scenarios, at least some of the plurality of cavities extend along the first direction respectively intersecting at an acute angle and a right angle with the opposite surfaces of the adjacent plate layers, so as to match different pressure bearing distributions and plate layer thickness distribution requirements.

In some embodiments, the included angles Q at which the first direction intersects with the opposite surfaces satisfy 75°≤Q≤90°.

For an included angle Q formed by the first direction and any one of the opposite surfaces, when a value of the included angle Q is 90°, a direction of pressure of the plurality of cavities to the opposite surfaces is parallel to the first direction, and in this case, a relatively significant pressure bearing effect can be achieved. However, when the included angle Q is too small, the pressure of the plurality of cavities to the opposite surfaces is decomposed into small component forces in directions perpendicular to the opposite surfaces, resulting in a weaker support effect. Therefore, with the included angle Q satisfying 75°≤Q≤90°, the support effect of the support structure on the plate layers can be improved, and thus the support effect of the support assembly is effectively improved.

In some embodiments, the plurality of cavities are spaced apart along one or more second directions parallel to one of the opposite surfaces.

The plurality of cavities are spaced apart along one or more second directions parallel to one of the opposite surfaces, such that the plurality of cavities can be distributed in a larger range and more uniformly between the adjacent plate layers, contributing to pressure dispersion when the support assembly bears a pressure, reducing the risk of damage to the support assembly caused by the pressure, and also correspondingly reducing the requirements on material strength and material amount of the support structure while satisfying the pressure bearing requirement.

In some embodiments, the support structure is integrally formed.

The support structure can be integrally formed before placed into the separating space between the adjacent plate layers. This helps to improve the assembly efficiency and also can achieve a more stable support effect by virtue of the integrally formed support structure.

In some embodiments, on a cross section parallel to one of the opposite surfaces, a minimum distance d between adjacent two of the plurality of cavities is less than a maximum width W1 of a cross section of any one of the two adjacent cavities.

In the plurality of cavities, a portion between two adjacent cavities may include a material forming the cavities, and the maximum width W1 of hollow cross sections of the cavities is greater than the minimum distance d between the two adjacent cavities, such that an amount of the material in the support structure can be reduced, thereby guaranteeing the support effect, also reducing the amount of the material forming the support structure, and reducing costs and weight.

In some embodiments, the minimum distance d satisfies 0.5 mm≤d≤4 mm; and/or the maximum width W1 of the cross section satisfies 2.3 mm≤W1≤17.3 mm.

An excessively small minimum distance d between two adjacent cavities is likely to cause deformation or damage when a pressure is applied. An excessively large minimum distance d results in use of more materials, leading to increase in costs and weight. Therefore, with the minimum distance d satisfying 0.5 mm≤d≤4 mm, a good pressure bearing effect and decrease in costs and weight can both be achieved. An excessively small maximum width W1 of the cross section requires more cavities to be arranged per unit area, making the support structure more complicated, increasing the manufacturing difficulty, also easily increasing an amount of material of the support assembly, and resulting in a higher weight. An excessively large maximum width W1of the cross section may affect a support force dispersion effect of the support structure and accordingly weaken the support effect of the support structure. Therefore, with the maximum width W1 of the cross section satisfying 2.3 mm≤W1≤17.3 mm, simplification and weight reduction of the support structure as well as a dispersion effect of the support structure can both be achieved.

In some embodiments, on a cross section parallel to one of the opposite surfaces, cross sections of at least some of the plurality of cavities are all in an orthohexagnal shape and are the same in size.

Cross sections of at least some hollow holes are all in an orthohexagnal shape and have same sizes, such that a honeycomb partial or integral support structure can be obtained. Such honeycomb support structure is quite stable, has good support performance, and therefore can effectively improve the overall support performance of the support assembly.

In some embodiments, the support structure includes a plurality of tubes; at least some of the plurality of tubes are independently formed; and the plurality of cavities include first cavities enclosed by inner walls of all the tubes.

The support structure is formed by the at least some tubes that are independently formed, and the first cavity enclosed by the inner wall of the tube serves as the cavity, helping to reduce the difficulty in forming the support structure. Moreover, the tube is obtained or manufactured easily, also helping to reduce manufacturing costs of the support assembly.

In some embodiments, the plurality of cavities further include second cavities enclosed by outer walls of adjacent ones of the plurality of tubes.

For the plurality of tubes from which the adjacent tubes can form a gap therebetween, the second cavity enclosed by the outer walls of the adjacent tubes may serve as the cavity, such that more cavities are formed in a more convenient way.

In some embodiments, on a cross section parallel to one of the opposite surfaces, a maximum width W2 of a cross section of the first cavity is greater than a minimum wall thickness t of the tube.

In the plurality of cavities formed by the plurality tubes, the maximum width W2 of the cross section of the first cavity is greater than the minimum wall thickness t of the tube, such that the support effect can be guaranteed, and an amount of a material forming the tube in the support structure can be reduced, thereby reducing costs and weight of the support structure.

In some embodiments, the maximum width W2 of the cross section satisfies 3 mm≤W2≤15 mm; and/or the minimum wall thickness t satisfies 0.5 mm≤t≤4 mm.

An excessively small maximum width W2 of the cross section requires more cavities to be arranged per unit area, making the support structure more complicated, increasing the manufacturing difficulty, also easily increasing an amount of material of the tube, and resulting in a higher weight. An excessively large maximum width W2 of the cross section may affect a support force dispersion effect of the support structure and accordingly weakens the support effect of the support structure. Therefore, with the maximum width W2 of the cross section satisfying 3 mm≤W1≤15 mm, simplification and weight reduction of the support structure as well as a dispersion effect of the support structure can both be achieved. An excessively small minimum wall thickness t is likely to cause deformation or damage when a pressure is applied. An excessively large minimum wall thickness t results in use of more materials, leading to increase in costs and weight. Therefore, with the minimum wall thickness t satisfying 0.5 mm≤t≤4 mm, a good pressure bearing effect and decrease in costs and weight are both achieved.

In some embodiments, on a cross section parallel to one of the opposite surfaces, cross sections of at least some of the plurality of tubes are all in a circular ring shape and are the same in size.

A circular tube with a cross section in a circular ring shape is obtained or manufactured more easily. As compared with other shapes, such circular tube can present better support performance, with a same amount of material used.

In some embodiments, the opposite surfaces of the adjacent plate layers each include a first region and a second region, and the opposite surfaces of the adjacent plate layers form the separating space in the first regions and are attached to each other in the second regions.

To improve the reliability of connection between the support assembly and another structure, the first regions are provided on the opposite surfaces of the adjacent plate layers to accommodate the support structure, and the second regions are provided for the opposite surfaces to be attached to each other. In this way, the portion of the support assembly corresponding to the second region can be connected to another structure, enhancing the connection strength; and the first region may be used for bearing a pressure, thereby satisfying use requirements of different portions of the support assembly.

In some embodiments, the second region is located at an outer edge of the first region and encloses the first region.

The second region is provided at the outer edge of the first region and encloses the first region, such that the second regions where the surfaces are attached to each other are used for forming a closed separating space of the first region for accommodating the support structure, and thus the support structure is restrained within the separating space more stably, improving the overall pressure bearing capacity and stability of the support assembly.

In some embodiments, a plurality of first regions are provided; the plurality of first regions are spaced apart; and an outer edge of each of the first regions is provided with the second region.

Based on a shape of the another structure connected to the support assembly, a plurality of first regions may be provided, the plurality of first regions are spaced apart, and the second regions surround outer edges of the first regions. In this way, different positions (for example, outer edges or middle crossbeams) of the another structure can be connected via the second regions, and the pressure bearing requirements of different regions are satisfied via the plurality of first regions.

In some embodiments, in a stacking direction of the at least two plate layers, a portion, corresponding to the first region, of an outer surface of at least one side of each of the at least two plate layers protrudes with respect to a portion corresponding to the second region.

For each of the outer surfaces of the at least two plate layers, the portion of this outer surface corresponding to the first region protrudes with respect to the portion of this outer surface corresponding to the second region, such that the portion containing the support structure in the support assembly mainly bears pressure, improving the support effect. In addition, the protruding structure can also implement a coarse positioning effect during connection between the support assembly and another structure.

In some embodiments, in the stacking direction of the at least two plate layers, the outer surface of at least one side of each of the at least two plate layers is flat.

The outer surface of at least one side of each of the at least two plate layers is configured as a plane, such that the plate layer can be placed more stably on the flat surface through the plane of this side, and more uniform stress is achieved, avoiding stress concentration.

In some embodiments, at least some of the at least two plate layers are made of a metal material, and the support structure is made of a metal material, such that the support structure can be welded to at least one of the opposite surfaces of the adjacent plate layers.

At least some of the at least two plate layers are made of a metal material, and the support structure is also made of a metal material, such that tight and fixed connection between different plate layers and between the support structure and the adjacent plate layers can be implemented through welding.

In some embodiments, at least some of the at least two plate layers are made of a plastic material, and the support structure is made of a plastic material, such that the support structure can be hot-melt connected to at least one of the opposite surfaces of the adjacent plate layers.

At least some of the at least two plate layers are made of a plastic material, and the support structure is also made of a plastic material, such that tight and fixed connection between different plate layers and between the support structure and the adjacent plate layers can be implemented through hot melting.

In some embodiments, the support assembly further includes:
a reinforcing layer covering an outer surface of at least one side of each of the at least two plate layers in a stacking direction of the at least two plate layers.

The outer surfaces of the at least two plate layers are each covered with the reinforcing layer, such that surface strength of the support assembly can be further enhanced, and abrasion resistance and scratch resistance of the support assembly are improved.

According to an aspect of this disclosure, a battery box is provided, including the foregoing support assembly;
where the support assembly is configured to form at least one wall of the battery box.

The foregoing support assembly being used to form at least one wall of the battery box can improve the support performance of the battery box and reduce the weight of the battery box.

In some embodiments, the battery box includes:
a box body including an accommodating groove; and
a box cover disposed at an open end of the accommodating groove and configured to cover the accommodating groove;
where the support assembly is configured to form a bottom wall of the box body.

The support assembly being configured as the bottom wall of the box body can simplify the structure of the battery box and improve the support performance of the bottom wall, such that the battery box and a battery cell therein can be better protected when the battery box undergoes extrusion or collision from one side of the bottom wall.

In some embodiments, the box body includes a box frame; at least two plate layers in the support assembly are stacked to form a stack structure; and the stack structure includes:
a first stacking region, where the support structure is provided between at least some adjacent plate layers in the first stacking region; and
a second stacking region, where all adjacent plate layers in the second stacking region are attached to each other in sequence along the stacking direction;
where the second stacking region is fixedly connected to the box frame.

The support structure is disposed between the adjacent plate layers or the adjacent plate layers are attached to each other in sequence, such that the stack structure is partitioned into different stacking regions. Moreover, the second stacking region in which all the adjacent plate layers are attached to each other in sequence along the stacking direction is fixedly connected to the box frame, such that the support assembly serving as the bottom wall can be fixedly connected to the box frame more reliably.

In some embodiments, at least part of the second stacking region is welded to the box frame.
at least part of the second stacking region being fixedly connected to the box frame through welding can improve the assembly efficiency.

In some embodiments, at least part of the second stacking region is fixedly connected to a lower surface of the box frame through friction stir welding.

A compact weld joint can be formed between the second stacking region and the lower surface of the box frame through friction stir welding, such that a more reliable connection is achieved. In addition, the welding process can be implemented through operation on a single side, without using an auxiliary material such as a welding wire. Therefore, more convenience is achieved.

In some embodiments, at least part of the second stacking region is fixedly connected to the box frame through a screw.
at least part of the second stacking region may alternatively be fixedly connected to the box frame through a screw, and such connection method does not have a special requirement on material or connection position like a welding method and also requires no pre-arrangement of a threaded hole or nut like a bolt connection method. Therefore, a more convenient and efficient use is achieved.

In some embodiments, at least part of the second stacking region is fixedly connected to the lower surface of the box frame through a flow drill screw.

The fixed connection method using a flow drill screw can implement fixed connection between different materials without preforming a hole, and connection can be implemented through operation on a single side. Therefore, such fixed connection method achieves a more convenient operation and is also suitable for fixed connection of different positions.

In some embodiments, the second stacking region includes a plurality of outer edge regions at an outer edge of the support assembly and a connection region connected between the plurality of outer edge regions and separating the first stacking regions; the plurality of outer edge regions and the box frame are welded and/or fixedly connected through a screw; and the connection region is fixedly connected to the box frame through a screw.

When the second stacking region includes not only the outer edge regions but also the connection region separating the first stacking regions, the outer edge regions may be fixedly connected to the box frame through welding and may alternatively be fixedly connected to the box frame through a screw. However, the connection region may be fixedly connected to the box frame through a screw, such that the connection region between the outer edge regions can be fixedly connected to a crossbeam or a longitudinal beam in the box frame more conveniently.

In some embodiments, the battery box includes:
a box body including an accommodating groove; and
a box cover disposed at an open end of the accommodating groove and configured to cover the accommodating groove;
where the support assembly is configured to form a side wall of the box body.

The support assembly can form a side wall of the box body to simplify the structure of the battery box and improve the support performance of the bottom wall, such that the battery box and a battery cell therein can be better protected when the battery box undergoes lateral extrusion or collision.

In some embodiments, the battery box includes:
a box body including an accommodating groove; and
a box cover disposed at an open end of the accommodating groove and configured to cover the accommodating groove;
where the support assembly is configured to form the box cover.

The support assembly can form the box cover to simplify the structure of the battery box and improve the support performance of the box cover, such that the battery box and a battery cell therein can be better protected when the battery box undergoes extrusion or collision from one side of the box cover.

According to an aspect of this disclosure, a battery is provided, including:
a battery cell; and
the foregoing battery box configured to accommodate the battery cell.

The battery using the foregoing battery box can achieve higher use safety.

According to an aspect of this disclosure, an electric device is provided, including:
the foregoing battery configured to provide electrical energy.

The electric device using the foregoing battery can achieve higher use safety.

In some embodiments, the electric device further includes:
a battery accommodating compartment configured to accommodate the battery; and
an operation compartment separated from the battery accommodating compartment through the support assembly.

For the electric device including the operation compartment, the support assembly can serve as the box cover or bottom wall of the battery box to separate the battery accommodating compartment from the operation compartment, thereby improving the use safety of the electric device while reducing space occupied by the battery.

### BRIEF DESCRIPTION OF DRAWINGS

To describe the technical solutions in the embodiments of this disclosure more clearly, the following briefly describes the accompanying drawings required for describing the embodiments of this disclosure. Apparently, the accompanying drawings in the following description show merely some embodiments of this disclosure, and persons of ordinary skill in the art may still derive other drawings from the accompanying drawings without creative efforts.

This disclosure can be understood more clearly according to the following detailed description with reference to the accompanying drawings, in which:
FIG. 1 is a schematic structural diagram of an electric device according to some embodiments of this disclosure;
FIG. 2 is a schematic exploded view of a battery according to some embodiments of this disclosure;
FIG. 3A is a schematic structural diagram of a support assembly according to some embodiments of this disclosure;
FIG. 3B is a schematic exploded view of FIG. 3A;
FIG. 4A and FIG. 4B are respectively schematic structural diagrams of a support assembly according to some other embodiments of this disclosure;
FIG. 5A is a schematic structural diagram of a support assembly according to still some other embodiments of this disclosure;
FIG. 5B is a schematic exploded view of FIG. 5A;
FIG. 6A is a schematic structural diagram of a support structure of a support assembly according to some embodiments of this disclosure;
FIG. 6B is an enlarged schematic diagram of region A in FIG. 6A;
FIG. 6C is a partially enlarged schematic diagram of a support structure of a support assembly according to some embodiments of this disclosure;
FIG. 7A is a schematic diagram of regions of opposite surfaces of adjacent plate layers in a support assembly from a perspective parallel to the opposite surfaces according to some embodiments of this disclosure;
FIG. 7B and FIG. 7C are respectively schematic diagrams of regions of opposite surfaces of adjacent plate layers in a support assembly from a perspective perpendicular to the opposite surfaces according to some embodiments of this disclosure;
FIG. 8 is a schematic structural diagram of a support assembly according to some embodiments of this disclosure;
FIG. 9 is a schematic exploded view of a battery box according to some embodiments of this disclosure;
FIG. 10 and FIG. 11 are respectively schematic diagrams of a connecting structure for a box frame and a support assembly in a battery box according to some embodiments of this disclosure;
FIG. 12A is a schematic exploded view of a battery box according to some embodiments of this disclosure;
FIG. 12B is a schematic structural diagram of a mounting structure for the battery box shown in FIG. 12A in an upward view angle;
FIG. 12C is a schematic structural diagram of A-A cross section in FIG. 12B; and
FIG. 12D is a schematic structural diagram of B-B cross section in FIG. 12B.

It should be understood that sizes of various parts shown in the accompanying drawings are not drawn to scale. Additionally, the same or similar reference signs denote the same or similar components.

### Description of reference signs:

10. battery box; 11. box body; 12. box cover; 111. bottom wall; 112. side wall; 113. box frame; 13. flow drill screw;
20a, 20b, 20c. plate layer;
30. support structure; 31. cavity; 32. tube; 311. first cavity; 312. second cavity;
40. reinforcing layer;
50. battery; 51. battery cell;
60. vehicle; 61. battery accommodating compartment; and 62. operation compartment.

### DESCRIPTION OF EMBODIMENTS

The following further describes the embodiments of this disclosure in detail with reference to the accompanying drawings and embodiments. The detailed description and accompanying drawings of the following embodiments are used to exemplarily illustrate the principle of this disclosure rather than to limit the scope of this disclosure, that is, this disclosure is not limited to the described embodiments.

In the descriptions of this disclosure, it should be noted that, unless otherwise stated, "a plurality of" means two or more; and the orientations or positional relationships indicated by the terms "upper", "lower", "left", "right", "inside", "outside", and the like are merely for ease and brevity of description of this disclosure rather than indicating or implying that the means or components mentioned must have specific orientations or must be constructed or manipulated according to particular orientations. These terms shall therefore not be construed as limitations on this disclosure. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The words of orientation appearing in the following description all are directions shown in the drawings, and do not limit the specific structure of this disclosure. In the descriptions of this disclosure, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of the foregoing terms in this disclosure as appropriate to specific situations.

The following describes in detail some embodiments of the present invention with reference to the accompanying drawings. In absence of conflicts, the features in the following embodiments may be combined.

In some related technologies, a base plate assembly of a battery box includes a base plate, buffer foam, a bottom protective plate, and the like. The base plate and a box frame are welded, the bottom protective plate and the box frame are fixedly connected through a bolt, and the buffer foam is filled between the base plate and the bottom protective plate. It has been found through research that such base plate assembly includes lots of components and parts, and pre-processing of holes and rivet screws is required for bolt connection. Therefore, the assembly process is time-consuming and complicated, and costs more.

In view of this, the embodiments of this disclosure provide a support assembly, a battery box, a battery, and an electric device, so as to satisfy the support requirements of the battery box, improve the use safety, simplify the assembly process of the battery box, improve the assembly efficiency, and lower the costs.

The support assembly in the embodiments of this disclosure is applicable to a battery box. For example, the support assembly forms at least one wall of the battery box. The support assembly is also applicable to other devices, for example, a box for carrying goods.

The battery box in the embodiments of this disclosure is applicable to various batteries, for accommodating a battery cell or battery module. The battery is applicable to various electric devices using a battery. The electric device may be a mobile phone, a portable device, a notebook computer, an electric bicycle, an electric vehicle, a ship, a spacecraft, an electric toy, an electric tool, and the like. For example, the spacecraft includes an airplane, a rocket, a space shuttle, and a spaceship. The electric toy includes a fixed or mobile electric toy, such as a game console, an electric vehicle toy, an electric ship toy, and an electric airplane toy. The electric tool includes an electric metal cutting tool, an electric grinding tool, an electric assembly tool, and an electric railway-specific tool, such as an electric drill, an electric grinder, an electric wrench, an electric screwdriver, an electric hammer, an electric impact drill, a concrete vibrator, and an electric planer. The foregoing electric device is not particularly limited in the embodiments of this disclosure.

A battery module disposed in a battery box may include a plurality of battery cells connected in series, parallel, or series-parallel. The battery cell refers to a smallest unit constituting a battery. The battery cell includes an electrode assembly in which electrochemical reactions take place. The battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this disclosure. The battery cell may be cylindrical, flat, cuboid, or of another shape. This is not limited in the embodiments of this disclosure.

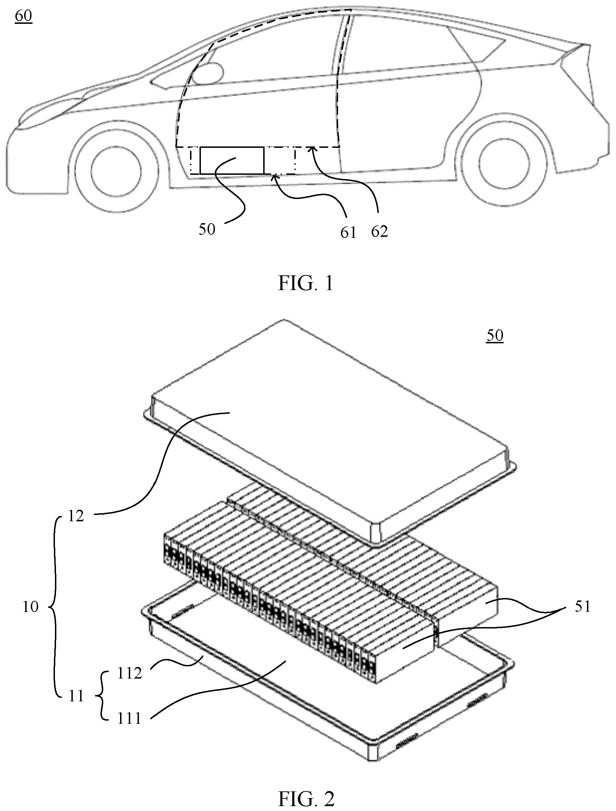

FIG. 1 is a schematic structural diagram of an electric device according to some embodiments of this disclosure. For ease of description, an electric apparatus being a vehicle is used as example for description. A vehicle 60 may be a fossil fuel vehicle, a natural-gas vehicle, or a new energy vehicle. The new energy vehicle may be a battery electric vehicle, a hybrid electric vehicle, or the like. For example, a battery 50 may be disposed at the bottom, front, or rear of the vehicle 60.

The battery 50 may be configured to supply power to the vehicle 60. For example, the battery 50 may be used as an operational power source for the vehicle 60 for use in a circuit system of the vehicle 60, for example, to satisfy power needs of start, navigation, and running of the vehicle 60. The battery 50 can be used not only as the operational power source for the vehicle 60, but also as a driving power source for the vehicle 60, replacing or partially replacing fossil fuel or natural gas to provide driving traction for the vehicle 60.

The vehicle 60 may also be provided with an axle, wheels, a motor, and a controller inside. The controller is configured to control power supply of the battery 50 to the motor. For example, when the vehicle 60 uses the battery 50 as a driving power supply, the controller can provide traction required for uniform speed maintaining and acceleration of the motor. The motor is configured to drive the axle to rotate so as to drive the wheels to rotate.

Referring to FIG. 1, in some embodiments, the electric device further includes a battery accommodating compartment 61 and an operation compartment 62. The battery accommodating compartment 61 is configured to accommodate the battery 50. The operation compartment 62 may be a driving cab (illustratively shown using a dashed box in FIG. 1) of the vehicle 60, while the battery accommodating compartment 61 (illustratively shown using a double-dotted line box in FIG. 1) may be disposed at the bottom of the driving cab of the vehicle 60. The operation compartment 62 may be separated from the battery accommodating compartment 61 through a support assembly. In this way, for the electric device including the operation compartment, the support assembly with good support performance can serve as a box cover or a bottom wall of a battery box to separate the operation compartment 62 from the battery accommodating compartment 61, thereby improving the use safety of the electric device while reducing space occupied by the battery.

FIG. 2 is a schematic structural diagram of a battery according to some embodiments of this disclosure. Referring to FIG. 2, in some embodiments, the battery 50 includes a battery cell 51 and a battery box 10. The battery box 10 is configured to accommodate the battery cell 51 and can provide functions such as cooling, sealing, and collision prevention for the battery cell, or prevent liquid or other foreign matters from adversely affecting charging and discharging or safety of the battery cell. A plurality of battery cells 51 may be provided and electrically connected (for example, connected in series, parallel, or series-parallel) so as to achieve electrical performance parameters required for the battery 50. The plurality of battery cells 51 may be arranged in rows, where one or more rows of battery cells 51 may be arranged in the battery box 10 as required.

In some embodiments, the plurality of battery cells 51 may be arranged along at least one of a length direction and a width direction of the battery box 10. At least one row or one column of battery cells 51 may be provided according to actual requirements. As required, one or more layers of battery cells 51 may alternatively be arranged along a height direction of the battery 50.

In some embodiments, a plurality of battery cells 51 may be connected in series, parallel, or series-parallel to assemble into a battery module first, and then a plurality of battery modules are connected in series, parallel, or series-parallel to assemble into an entirety which is accommodated in the battery box 10. In some other embodiments, all the battery cells 51 are directly connected in series, parallel, or series-parallel, and then an entirety formed by all the battery cells 51 is accommodated in the battery box 10.

The battery cell 51 may include: a housing, an electrode assembly, and an end cover assembly. The battery cell 51 further includes an electrolyte inside. The housing includes a chamber and an end opening in communication with the chamber. The chamber is configured to accommodate the electrode assembly. A shape of the housing is determined depending on a shape of one or more electrode assemblies. The housing may be a hollow cuboid, a hollow cube, or a hollow cylinder. The housing may be made of a conductive metal material or plastic. Optionally, the housing is made of aluminum or aluminum alloy.

The end cover assembly is disposed at the end opening to form, together with the housing, a closed chamber for accommodating the electrode assembly. The end cover assembly may include two poles. The two poles have opposite polarities and are respectively electrically connected via a connecting assembly or directly to tabs having corresponding polarities on an electrode plate in the electrode assembly.

The electrode assembly may include a positive electrode plate, a negative electrode plate, and a separator located between the positive electrode plate and the negative electrode plate. Working of the battery cell relies on migration of metal ions between the positive electrode plate and the negative electrode plate.

The positive electrode plate includes a positive electrode current collector and a positive electrode active substance layer. A positive electrode tab is connected to or formed on the positive electrode current collector. A lithium-ion battery is used as an example, in which a positive electrode current collector may be made of aluminum, and a positive electrode active substance may be a lithiated substance capable of providing lithium ions, for example, lithium cobaltate, lithium iron phosphate, ternary lithium, or lithium manganate oxide. For a case in which the positive electrode current collector and the positive electrode active substance layer are adhered using an adhesive substance, the adhesive substance may be PVDF (Polyvinylidene Fluoride, Polyvinylidene Fluoride) or the like.

The negative electrode plate includes a negative electrode current collector and a negative electrode active substance layer. A negative electrode tab is connected to or formed on the negative electrode current collector. A lithium-ion battery is used as an example, in which a negative electrode current collector may be made of copper and a negative electrode active substance may be a substance capable of storing lithium ions, for example, graphite, silicon, or lithium titanate. For a case in which the negative electrode current collector and the negative electrode active substance layer are adhered using an adhesive substance, the adhesive substance may be carboxymethyl cellulose, epoxy resin, styrene butadiene rubber, or the like.

The separator may be made of PP (polypropylene, polypropylene), PE (polyethylene, polyethylene), or the like. The electrolyte includes an electrolytic salt and a solvent. The electrolytic salt may be organic metal salt, inorganic salt, or the like, and can provide metal ions that can migrate between the positive electrode plate and the negative electrode plate. To allow for a sufficient current flowing capacity, a plurality of positive electrode tabs may be provided and stacked together, and a plurality of negative electrode tabs may be provided and stacked together. In addition, the electrode assembly may be a wound structure or a stacked structure. However, the embodiments of this disclosure are not limited thereto.

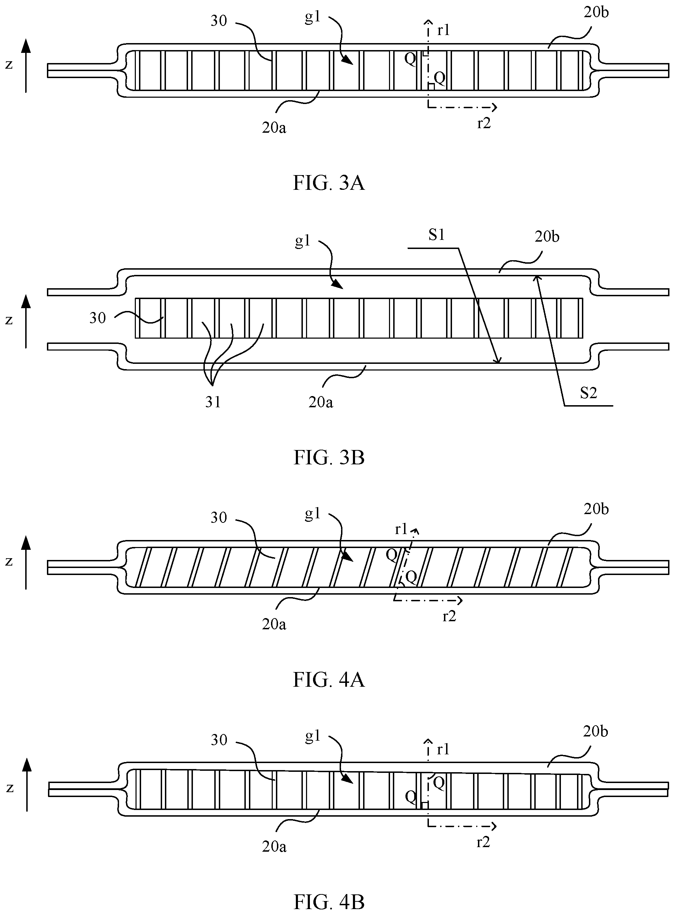

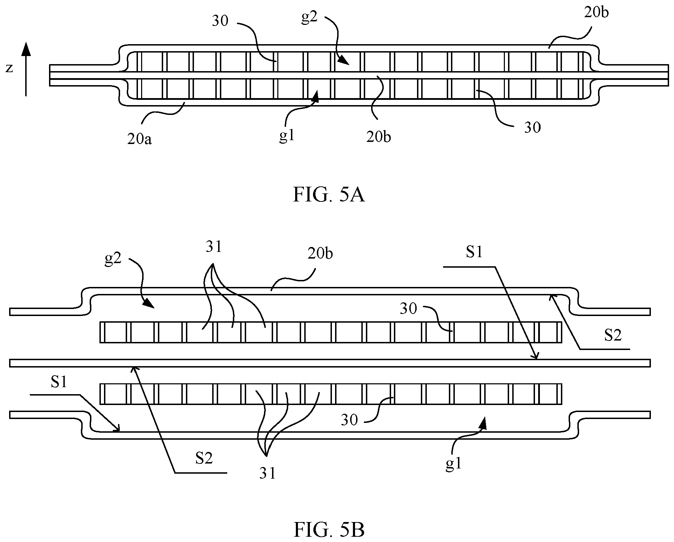

FIG. 3A is a schematic structural diagram of a support assembly according to some embodiments of this disclosure. FIG. 3B is a schematic exploded view of FIG. 3A. FIG. 4A and FIG. 4B are respectively schematic structural diagrams of a support assembly according to some other embodiments of this disclosure. FIG. 5A is a schematic structural diagram of a support assembly according to still some other embodiments of this disclosure. FIG. 5B is a schematic exploded view of FIG. 5A.

Referring to FIG. 3A to FIG. 5B, this disclosure provides a support assembly including at least two plate layers and a support structure 30. The at least two plate layers are stacked, and a separating space is provided between adjacent ones of the at least two plate layers. The plate layer is a thin sheet of material with a specified surface area and thickness, for example, a metal plate or a plastic plate. The at least two plate layers may be stacked along a stacking direction. For example, two plate layers 20a and 20b shown in FIG. 3A are stacked along a stacking direction z. For another example, three plate layers 20a, 20b, and 20c shown in FIG. 5A are stacked along a stacking direction z.

A quantity of the plate layers may be selected based on actual requirements, for example, two or three. The sequentially stacked three plate layers may be integrally formed with the support structure 30 through one hot pressing or one braze welding, with a better bearing effect achieved. A support structure formed by stacking two plate layers is lighter and therefore is more convenient in manufacturing.

Based on the quantity of the plate layers, at least two plate layers can form at least one group of adjacent plate layers, for example, adjacent plate layers 20a and 20b shown in FIG. 3A. A separating space g1 is provided between this group of adjacent plate layers 20a and 20b. For another example, for two groups of adjacent plate layers shown in FIG. 5A, in the stacking direction z, a separating space g1 is provided between a first group of adjacent plate layers 20a and 20b, and a separating space g2 is provided between a second group of adjacent plate layers 20b and 20c.

It should be noted that for a plurality of plate layers, a separating space may be provided between each group of adjacent plate layers, or a separating space may be provided between some groups of adj acent plate layers, and the other groups of adjacent plate layers are directly attached to each other with no separating space.

The support structure 30 is disposed in the separating space and can support opposite surfaces of the adjacent plate layers. For example, in FIG. 3B, opposite surfaces S1 and S2 of the adjacent plate layers 20a and 20b may be supported by the support structure 30. For another example, in FIG. 5B, for the first group of adjacent plate layers 20a and 20b and the second group of adjacent plate layers 20b and 20c stacked along the stacking direction z, opposite surfaces S1 and S2 of the two groups of adjacent plate layers can both be supported by the support structure 39.

Referring to FIG. 3B and FIG. 5B, the support structure 30 includes a plurality of cavities 31, at least some of the cavities 31 extend along a first direction r1, and the first direction r1 intersects with opposite surfaces of the adjacent plate layers. The cavity may be a through hole extending and penetrating through along the first direction r1, may be a blind hole extending along the first direction r1 with one end or middle portion closed, or may be a tubular cavity extending along the first direction r1 with at least one end closed.

The plurality of cavities are provided between the adjacent plate layers stacked, and at least some of the plurality of cavities extend along the first direction intersecting with the opposite surfaces of the adjacent plate layers, such that when withstanding an external pressure, the support assembly can provide reliable support for the plate layers by virtue of a material forming the cavities in the support structure. Moreover, the plurality of cavities can be distributed in a larger range in the separating space, reducing the weight of the support structure while improving the overall support effect of the support assembly, thereby lightening the support assembly.

Referring to FIG. 3A, FIG. 3B, and FIG. 5B, in some embodiments, the first direction r1 perpendicularly intersects with the opposite surfaces S1 and S2 of the adjacent plate layers. It can be seen in FIG. 3A that included angles Q between the first direction r1 and the opposite surfaces S1 and S2 are both 90°. At least some of the plurality of cavities extend along the first direction perpendicularly intersecting with the opposite surfaces of the adjacent plate layers, such that the pressure bearing capacity of the support assembly can be increased to a greater extent, thereby facilitating further weight reduction or thickness reduction of the support assembly.

Referring to FIG. 4A, in some embodiments, the first direction r1 intersects at an acute angle with both the opposite surfaces S1 and S2 of the adjacent plate layers. It can be seen in FIG. 4A that included angles Q between the first direction r1 and the opposite surfaces S1 and S2 are both acute angles. At least some of the plurality of cavities extend along the first direction intersecting at an acute angle with both the opposite surfaces of the adjacent plate layers, such that pressure bearing requirements of the support assembly can be satisfied, and a distribution range of the support assembly in the separating space can also be enlarged.

In FIG. 4A, the first direction r1 is inclined with respect to the stacking direction z of the at least two plate layers at a preset angle, for example, at an acute angle. In some other embodiments, the first direction r1 may alternatively be parallel to the stacking direction z.

Referring to FIG. 4B, in some embodiments, the first direction r1 intersects at an acute angle with one of the opposite surfaces S1 and S2 of the adjacent plate layers and perpendicularly intersects with the other one of the opposite surfaces S1 and S2 of the adjacent plate layers. In FIG. 4B, the first direction r1 perpendicularly intersects with a surface S1 of the plate layer 20a close to one side of the plate layer 20b and intersects at an acute angle with a surface S2 of the plate layer 20b close to one side of the plate layer 20a. In this way, according to actual requirements in application scenarios, at least some of the plurality of cavities extend along the first direction respectively intersecting at an acute angle and a right angle with the opposite surfaces of the adjacent plate layers, so as to match different pressure bearing distribution and plate layer thickness distribution requirements.

In the foregoing embodiments, the included angles Q at which the first direction r1 intersects with the opposite surfaces S1 and S2 satisfy 75°≤Q≤90°. For an included angle Q formed by the first direction and any one of the opposite surfaces, when a value of the included angle Q is 90°, a direction of pressure of the plurality of cavities to the opposite surfaces is parallel to the first direction, and in this case, a relatively significant pressure bearing effect can be achieved. However, when the included angle Q is too small, the pressure of the plurality of cavities to the opposite surfaces is decomposed into small component forces in directions perpendicular to the opposite surfaces, resulting in a weaker support effect. Therefore, with the included angle Q satisfying 75°≤Q≤90°, the support effect of the support structure on the plate layers can be improved, and thus the support effect of the support assembly is effectively improved.

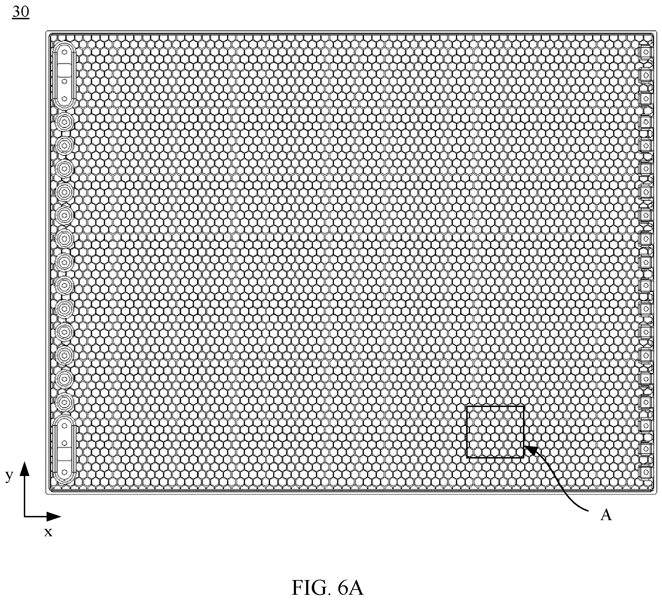

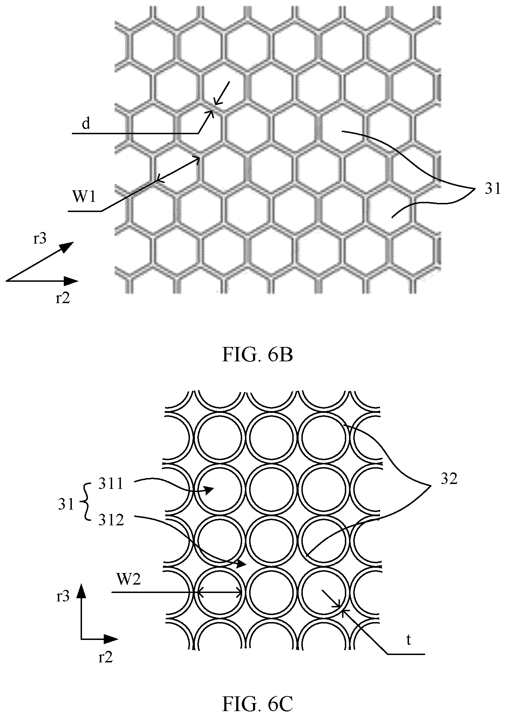

FIG. 6A is a schematic structural diagram of a support structure of a support assembly according to some embodiments of this disclosure. FIG. 6B is an enlarged schematic diagram of region A in FIG. 6A. FIG. 6C is a partially enlarged schematic diagram of a support structure of a support assembly according to some embodiments of this disclosure.

Referring to FIG. 6A, in some embodiments, the plurality of cavities 31 are spaced apart along one or more second directions, and the one or more second directions may be parallel to one of the opposite surfaces of the adjacent plate layers. In FIG. 6A, a full profile of the support structure 30 on a cross section perpendicular to the stacking direction z may be a rectangle with one group of opposite sides parallel to direction x and the other group of opposite sides parallel to direction y.

In FIG. 6B, the plurality of cavities 31 may be spaced apart along both two second directions r2 and r3, where the two second directions r2 and r3 form an acute angle, and the second direction r2 may be parallel to direction x. For another example, in FIG. 6C, the plurality of cavities 31 may be spaced apart along both the two second directions r2 and r3, where the two second directions r2 and r3 are perpendicular to each other and are respectively parallel to direction x and direction y.

For an embodiment in which the opposite surfaces S1 and S2 are parallel, the second direction may be parallel to any one of the opposite surfaces S1 and S2. For opposite surfaces S1 and S2 that are not parallel to each other, the second direction may be parallel to the surface S1 or parallel to the surface S2.

In this embodiment, the plurality of cavities are spaced apart along one or more second directions parallel to one of the opposite surfaces, such that the plurality of cavities can be distributed in a larger range and more uniformly between the adjacent plate layers, contributing to pressure dispersion when the support assembly bears a pressure, reducing the risk of damage to the support assembly caused by the pressure, and also correspondingly reducing the requirements on material strength and material amount of the support structure while satisfying the pressure bearing requirement.

Referring to FIG. 6A and FIG. 6B, in some embodiments, the support structure 30 is integrally formed. In other words, the support structure 30 can be integrally formed before placed into the separating space between the adjacent plate layers. This helps to improve the assembly efficiency and also can achieve a more stable support effect by virtue of the integrally formed support structure.

Referring to FIG. 6B, in some embodiments, on a cross section parallel to one of the opposite surfaces S1 and S2, a minimum distance d between adjacent two of the plurality of cavities 31 is less than a maximum width W1 of a cross section of any one of the two adjacent cavities 31. In the plurality of cavities, a portion between two adjacent cavities may include a material forming the cavities, and the maximum width W1 of hollow cross sections of the cavities is greater than the minimum distance d between the two adjacent cavities, such that an amount of the material in the support structure can be reduced, thereby guaranteeing the support effect, also reducing the amount of the material forming the support structure, and reducing costs and weight.

In FIG. 6B, the minimum distance d may satisfy 0.5 mm≤d≤4 mm, for example, a value of d may be 1 mm, 1.5 mm, 2.4 mm, 3.2 mm, or the like. An excessively small minimum distance d between two adjacent cavities is likely to cause deformation or damage when a pressure is applied. An excessively large minimum distance d results in use of more materials, leading to increase in costs and weight. Therefore, with the minimum distance d satisfying 0.5 mm≤d≤4 mm, a good pressure bearing effect and decrease in costs and weight can both be achieved.

In FIG. 6B, the maximum width W1 of the cross section may satisfy 2.3 mm≤W1≤17.3 mm, for example, a value of W1 may be 3.5 mm, 6 mm, 8.4 mm, 12.5 mm, 15.7 mm, or the like. An excessively small maximum width W1 of the cross section requires more cavities to be arranged per unit area, making the support structure more complicated, increasing the manufacturing difficulty, also easily increasing an amount of material of the support assembly, and resulting in a higher weight. An excessively large maximum width W1 of the cross section may affect a support force dispersion effect of the support structure and accordingly weaken the support effect of the support structure. Therefore, with the maximum width W1 of the cross section satisfying 2.3 mm≤W1≤17.3 mm, simplification and weight reduction of the support structure as well as a dispersion effect of the support structure can both be achieved.

To further improve the overall support performance of the support assembly, referring to FIG. 6B, in some embodiments, on a cross section parallel to one of the opposite surfaces S1 and S2, cross sections of at least some of the plurality of cavities 31 are all in an orthohexagnal shape and are the same in size. The cavities in such shape can form a honeycomb partial or integral support structure. Since the honeycomb support structure is quite stable, has good support performance, and therefore can effectively improve the overall support performance of the support assembly.

Referring to FIG. 6C, in some embodiments, the support structure 30 includes a plurality of tubes 32; at least some of the plurality of tubes 32 are independently formed; and the plurality of cavities 31 include first cavities 311 enclosed by inner walls of all the tubes 32. The support structure is formed by the at least some tubes that are independently formed, and the first cavity enclosed by the inner wall of the tube serves as the cavity, helping to reduce the difficulty in forming the support structure. Moreover, the tube is obtained or manufactured easily, also helping to reduce manufacturing costs of the support assembly.

In FIG. 6C, the plurality of cavities 31 further include second cavities 312 enclosed by outer walls of adjacent ones of the plurality of tubes 32. For the plurality of tubes from which the adjacent tubes can form a gap therebetween, the second cavity enclosed by the outer walls of the adj acent tubes may serve as the cavity, such that more cavities are formed in a more convenient way.

Referring to FIG. 6C, in some embodiments, on a cross section parallel to one of the opposite surfaces S1 and S2, a maximum width W2 of a cross section of the first cavity 311 is greater than a minimum wall thickness t of the tube 32. In the plurality of cavities formed by the plurality tubes, the maximum width W2 of the cross section of the first cavity is greater than the minimum wall thickness t of the tube, such that the support effect can be guaranteed, and an amount of a material forming the tube in the support structure can be reduced, thereby reducing costs and weight of the support structure.

In FIG. 6C, the maximum width W2 of the cross section satisfies 3 mm≤W2≤15 mm, for example, a value of W2 may be 4.5 mm, 7 mm, 9.2 mm, 12.4 mm, 13.6 mm, or the like. An excessively small maximum width W2 of the cross section requires more cavities to be arranged per unit area, making the support structure more complicated, increasing the manufacturing difficulty, also easily increasing an amount of material of the tube, and resulting in a higher weight. An excessively large maximum width W2 of the cross section may affect a support force dispersion effect of the support structure and accordingly weakens the support effect of the support structure. Therefore, with the maximum width W2 of the cross section satisfying 3 mm≤W1≤15 mm, simplification and weight reduction of the support structure as well as a dispersion effect of the support structure can both be achieved.

In FIG. 6C, the minimum wall thickness t satisfies 0.5 mm≤t≤4 mm, for example, a value of t is 1.2 mm, 2 mm, 3.5 mm, or the like. An excessively small minimum wall thickness t is likely to cause deformation or damage when a pressure is applied. An excessively large minimum wall thickness t results in use of more materials, leading to increase in costs and weight. Therefore, with the minimum wall thickness t satisfying 0.5 mm≤t≤4 mm, a good pressure bearing effect and decrease in costs and weight are both achieved.

To further improve the overall support performance of the support assembly, referring to FIG. 6C, in some embodiments, on a cross section parallel to one of the opposite surfaces S1 and S2, cross sections of at least some of the plurality of tubes 32 are all in a circular ring shape and are the same in size. A circular tube with a cross section in a circular ring shape is obtained or manufactured more easily. For example, a plurality of circular tube segments that are the same in size are formed according to a fixed-length segmented circular tube. As compared with other shapes, such circular tube can present better support performance, with a same amount of material used.

To allow the support structure to support the adjacent plate layers more effectively, in some embodiments, at least some of the at least two plate layers are made of a metal material such as aluminum alloy, and the support structure 30 is made of a metal material such as aluminum alloy. In this way, the support structure 30 can be welded to at least one of the opposite surfaces of the adjacent plate layers, such that tight and fixed connection between different plate layers and between the support structure and the adjacent plate layers can be implemented through welding.

During welding, the opposite surfaces of the adjacent plate layers may be fully coated with a solder. During braze welding, materials in the cavities of the support structure can all form a welding structure with the adjacent plate layers, thereby implementing large-scale one-time welding formation and achieving higher efficiency. In addition, since a larger range of welding is implemented between the support structure and the adjacent plate layers, better support performance can be presented.

In some other embodiments, at least some of the at least two plate layers are made of a plastic material, and the support structure 30 is made of a plastic material, such that the support structure 30 can be hot-melt connected to at least one of the opposite surfaces S1 and S2 of the adjacent plate layers, thereby implementing tight and fixed connection between different plate layers and between the support structure and the adjacent plate layers through hot melting.

During hot-melt connection, the adjacent plate layers and the support structure can be integrally hot melted through a hot-melting crimping process so as to implement a larger range of hot-melt connection formation and achieve higher efficiency. In addition, since a larger range of welding is implemented between the support structure and the adjacent plate layers, better support performance can be presented.

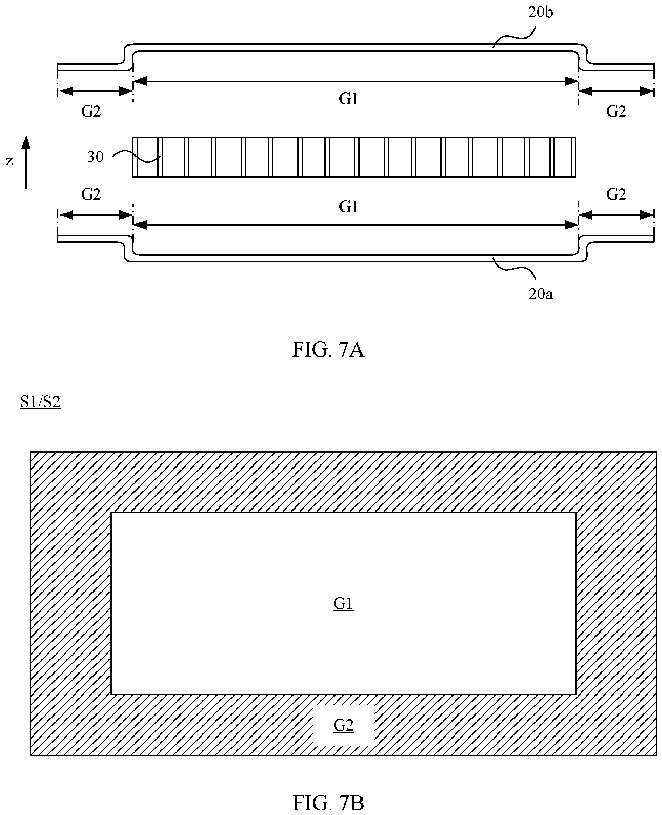

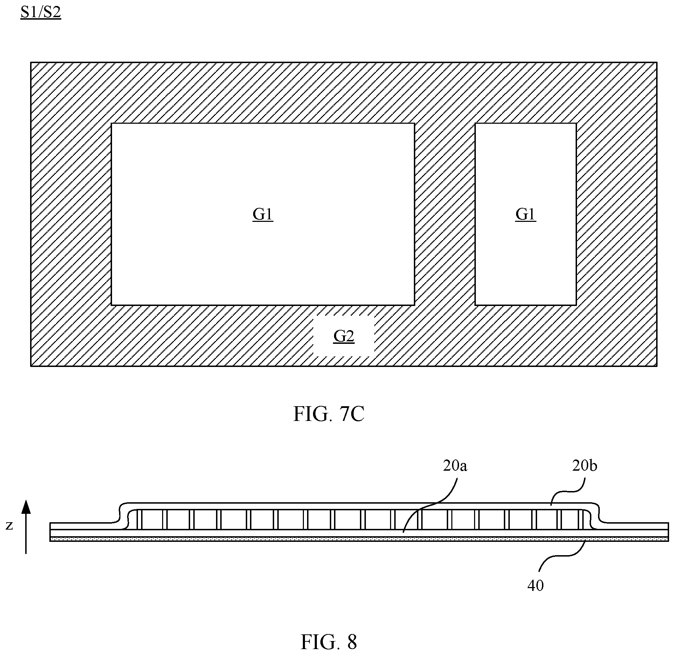

FIG. 7A is a schematic diagram of regions of opposite surfaces of adjacent plate layers in a support assembly from a perspective parallel to the opposite surfaces according to some embodiments of this disclosure. FIG. 7B and FIG. 7C are respectively schematic diagrams of regions of opposite surfaces of adj acent plate layers in a support assembly from a perspective perpendicular to the opposite surfaces according to some embodiments of this disclosure.

To improve the reliability of connection between the support assembly and another structure, referring to FIG. 7A to FIG. 7C, in some embodiments, the opposite surfaces (for example, surface S1 or S2) of the adjacent plate layers each include a first region G1 and a second region G2, and the opposite surfaces S1 and S2 of the adjacent plate layers each form a separating space in the first region G1 and are attached to each other in the second regions G2. It can be seen from FIG. 7A that since the second regions G2 of the opposite surfaces S1 and S2 are attached to each other, portions of the adjacent plate layers corresponding to the second regions G2 are thinner than portions corresponding to the first regions, allowing the portions of the adjacent plate layers corresponding to the second regions G2 to be fixedly connected to another structure.

In these embodiments, the first regions are provided on the opposite surfaces of the adjacent plate layers to accommodate the support structure, and the second regions are provided for the opposite surfaces to be attached to each other. In this way, the portion of the support assembly corresponding to the second region can be connected to another structure, enhancing the connection strength; and the first region may be used for bearing a pressure, thereby satisfying use requirements of different portions of the support assembly.

Referring to FIG. 7B, in some embodiments, the second region G2 is located at an outer edge of the first region G1 and encloses the first region G1. The second region is provided at the outer edge of the first region and encloses the first region, such that the second regions where the surfaces are attached to each other are used for forming a closed separating space of the first region for accommodating the support structure, and thus the support structure is restrained within the separating space more stably, improving the overall pressure bearing capacity and stability of the support assembly.

Referring to FIG. 7C, in some embodiments, a plurality of first regions G1 are provided; the plurality of first regions G1 are spaced apart; and an outer edge of each of the first regions G1 is provided with the second region. G2 Based on a shape of the another structure connected to the support assembly, a plurality of first regions may be provided, the plurality of first regions are spaced apart, and the second regions surround outer edges of the first regions. In this way, different positions (for example, outer edges or middle crossbeams) of the another structure can be connected via the second regions, and the pressure bearing requirements of different regions are satisfied via the plurality of first regions.

FIG. 8 is a schematic structural diagram of a support assembly according to some embodiments of this disclosure. Referring to FIG. 3A, FIG. 5A, and FIG. 8, the support assembly may be present in different structural forms. Referring to FIG. 3A, FIG. 5A, and FIG. 8, in some embodiments, in the stacking direction z of the at least two plate layers, a portion, corresponding to the first region G1, of an outer surface of at least one side of each of the at least two plate layers protrudes with respect to a portion corresponding to the second region G2.

For example, in FIG. 3A and FIG. 5A, portions, corresponding to the first regions G1, of outer surfaces of upper and lower sides of the at least two plate layers protrude with respect to portions corresponding to the second region G2; and in FIG. 8, a portion, corresponding to the first region G1, of the outer surface of the upper side of the at least two plate layers protrudes with respect to a portion corresponding to the second region G2.

For each of the outer surfaces of the at least two plate layers, the portion of this outer surface corresponding to the first region protrudes with respect to the portion of this outer surface corresponding to the second region, such that the portion containing the support structure in the support assembly mainly bears pressure, improving the support effect. In addition, the protruding structure can also implement a coarse positioning effect during connection between the support assembly and another structure.

Referring to FIG. 8, in some embodiments, in the stacking direction z of the at least two plate layers, the outer surface of at least one side of each of the at least two plate layers is flat. The outer surface of at least one side of each of the at least two plate layers is configured as a plane, such that the plate layer can be placed more stably on the flat surface through the plane of this side, and more uniform stress is achieved, avoiding stress concentration.

To improve the abrasion resistance and scratch resistance of the support assembly and satisfy the requirement on deformation and damage resistance during collision, referring to FIG. 8, in some embodiments, the support assembly further includes a reinforcing layer 40. The reinforcing layer 40 covers an outer surface of at least one side of each of the at least two plate layers in the stacking direction z. The reinforcing layer 40 may be a film layer attached to an outer surface of a plate layer, for example, a polyvinyl chloride PVC film layer. In this way, the outer surfaces of the at least two plate layers are each covered with the reinforcing layer, such that surface strength of the support assembly can be further enhanced, and the abrasion resistance and scratch resistance of the support assembly are improved.

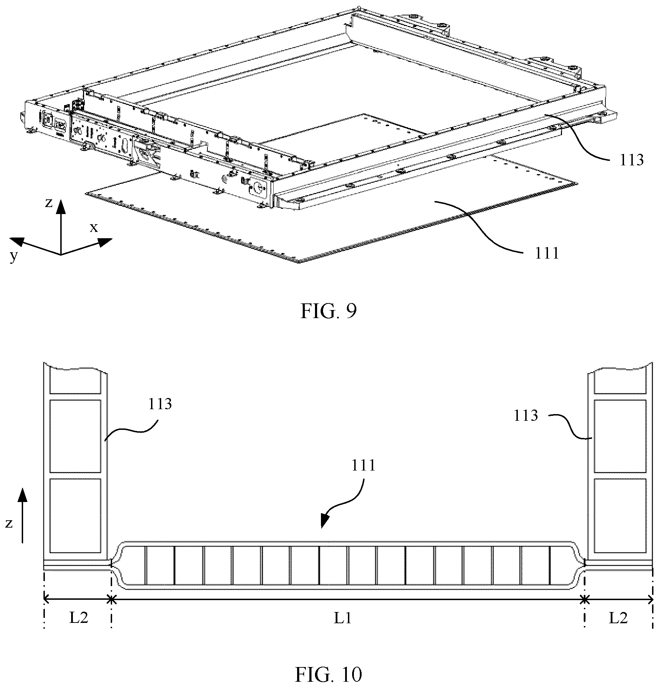

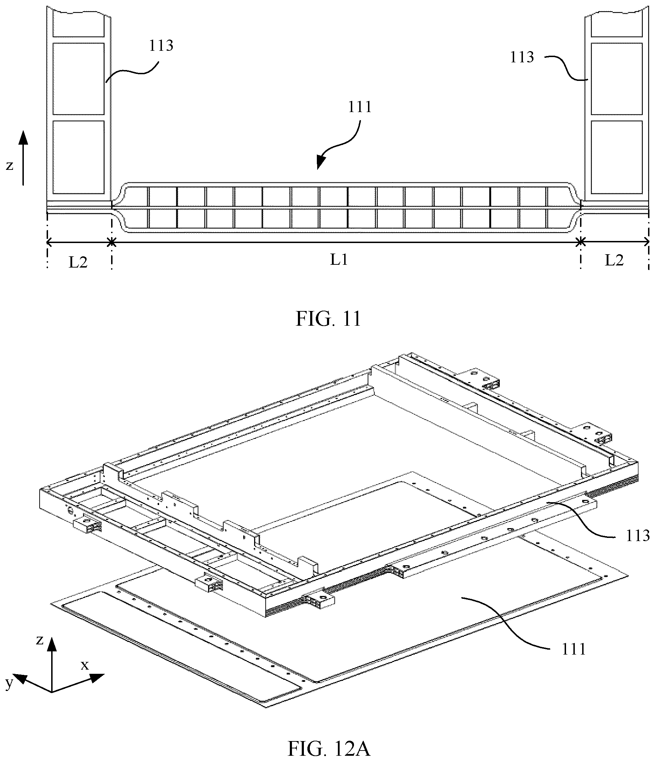

FIG. 9 is a schematic exploded view of a battery box according to some embodiments of this disclosure. FIG. 10 and FIG. 11 are respectively schematic diagrams of a connecting structure for a box frame and a support assembly in a battery box according to some embodiments of this disclosure. Referring to FIG. 2, this disclosure further provides a battery box 10 including the support assembly according to any one of the foregoing embodiments. The support assembly may be configured to form at least one wall of the battery box 10. The foregoing support assembly being used to form at least one wall of the battery box can improve the support performance of the battery box and reduce the weight of the battery box. Moreover, as compared with assembly of a battery box in related technologies, a battery box using the foregoing support assembly includes less components, such that an assembly process is simplified. Therefore, a time for assembling the battery box can be shortened by 16% to 20%, and the assembly efficiency is improved. This helps to lower the manufacturing costs.

In FIG. 2, the battery box 10 includes a box body 11 and a box cover 12. The box body 11 includes an accommodating groove. The box cover 12 is disposed at an open end of the accommodating groove and configured to cover the accommodating groove. The support assembly may be configured to form a bottom wall 111 of the box body 11. The support assembly being configured as the bottom wall of the box body can simplify the structure of the battery box and improve the support performance of the bottom wall, such that the battery box and a battery cell therein can be better protected when the battery box undergoes extrusion or collision from one side of the bottom wall.

In some other embodiments, the support assembly may be configured to form a side wall 112 of the box body 11 to simplify the structure of the battery box and improve the support performance of the bottom wall, such that the battery box and a battery cell therein can be better protected when the battery box undergoes lateral extrusion or collision.

The support assembly may alternatively be configured to form the box cover 12 to simplify the structure of the battery box and improve the support performance of the box cover, such that the battery box and a battery cell therein can be better protected when the battery box undergoes extrusion or collision from one side of the box cover.

Referring to FIG. 9 to FIG. 11, in some embodiments, the box body 11 includes a box frame 113. In the support assembly, at least two plate layers forming the bottom wall 111 of the box body 11 are stacked to form a stack structure. The stack structure may include a first stacking region L1 and a second stacking region L2. The support structure 30 is provided between at least some adjacent plate layers in the first stacking region L1. All adjacent plate layers in the second stacking region L2 are attached to each other in sequence along the stacking direction z. The second stacking region L2 is fixedly connected to the box frame 113. The support structure is disposed between the adjacent plate layers or the adjacent plate layers are attached to each other in sequence, such that the stack structure is partitioned into different stacking regions. Moreover, the second stacking region in which all the adjacent plate layers are attached to each other in sequence along the stacking direction is fixedly connected to the box frame, such that the support assembly serving as the bottom wall can be fixedly connected to the box frame more reliably.

The second stacking region L2 may be fixedly connected to the box frame 113 using various fixed connection methods. For example, at least part of the second stacking region L2 may be welded to the box frame 113. at least part of the second stacking region being fixedly connected to the box frame through welding can improve the assembly efficiency.

For example, at least part of the second stacking region L2 may be fixedly connected to a lower surface of the box frame 113 through friction stir welding (Friction Stir Welding, FSW for short). Through FSW, a compact weld joint can be formed between the second stacking region and the lower surface of the box frame, such that a more reliable connection is achieved. In addition, the welding process can be implemented through operation on a single side, without using an auxiliary material such as a welding wire. Therefore, more convenience is achieved.

For another example, at least part of the second stacking region L2 may be fixedly connected to the box frame 113 through a screw. at least part of the second stacking region may alternatively be fixedly connected to the box frame through a screw, and such connection method does not have a special requirement on material or connection position like a welding method and also requires no pre-arrangement of a threaded hole or nut like a bolt connection method. Therefore, a more convenient and efficient use is achieved.

For example, at least part of the second stacking region 12 is fixedly connected to the lower surface of the box frame 113 through a flow drill screw (Flow Drill Screw, FDS for short). The fixed connection method using an FDS can implement fixed connection between different materials without preforming a hole, and connection can be implemented through operation on a single side. Therefore, such fixed connection method achieves a more convenient operation and is also suitable for fixed connection of different positions.

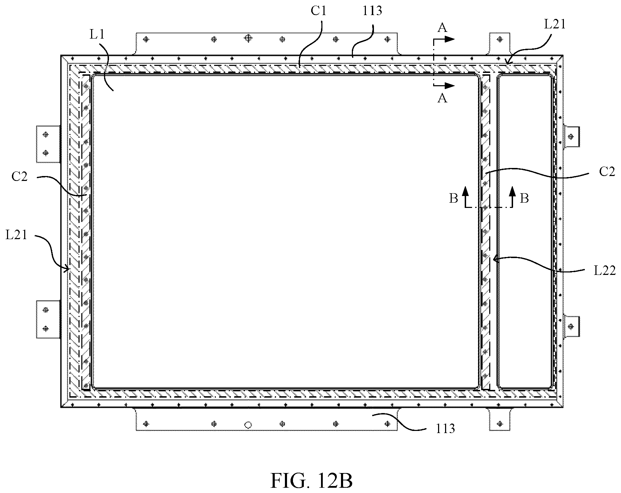

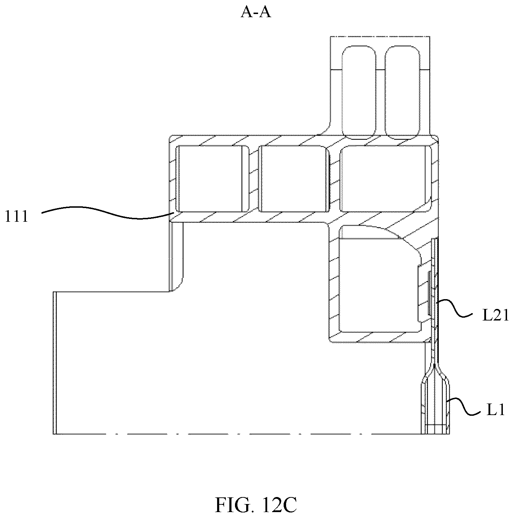

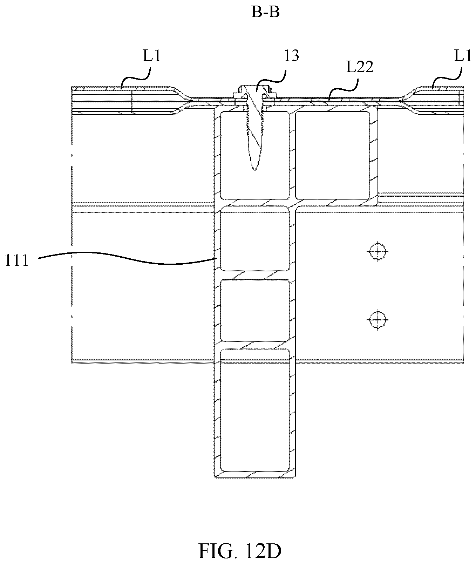

FIG. 12A is a schematic exploded view of a battery box according to some embodiments of this disclosure. FIG. 12B is a schematic structural diagram of a mounting structure for the battery box shown in FIG. 12A in an upward view angle. FIG. 12C is a schematic structural diagram of A-A cross section in FIG. 12B. FIG. 12D is a schematic structural diagram of B-B cross section in FIG. 12B.

Referring to FIG. 12A and FIG. 12B, in some embodiments, the second stacking region L2 may include a plurality of outer edge regions L21 at an outer edge of the support assembly and a connection region L22 connected between the plurality of outer edge regions L21 and separating the first stacking regions L1. The outer edge regions L21 may be configured to be fixedly connected to an edge region of the box frame 113, and the connection region L22 may be configured to be fixedly connected to a crossbeam or a longitudinal beam in the box frame 113.

Referring to FIG. 12B and FIG. 12C, the plurality of outer edge regions L21 and the box frame 113 are welded and/or fixedly connected through screws. It can be seen in FIG. 12B that region C1 represented by a left oblique line is a welded region welded in an FSW manner, and region C2 represented by a right oblique line is a region fixedly connected through flow drill screws 13. The outer edge region L21 may be fixedly connected through only welding or through only a screw. Alternatively, the outer edge region L21 may have a portion fixedly connected through welding and the other portion fixedly connected through screws.

Referring to FIG. 12B and FIG. 12D, the connection region L22 is fixedly connected to the box frame 113 through screws. The connection region is fixedly connected to the box frame through a screw, such that the connection region between the outer edge regions can be fixedly connected to a crossbeam or a longitudinal beam in the box frame more conveniently.

Based on the battery box 10 of the foregoing embodiments, referring to FIG. 2, this disclosure provides a battery 50 including a battery cell 51 and the foregoing battery box 10. The battery box 10 is configured to accommodate the battery cell 51. The battery using the foregoing battery box can achieve higher use safety.

Based on the battery of the foregoing embodiments, referring to FIG. 1, this disclosure provides an electric device including the foregoing battery 50 configured to provide electrical energy. The electric device using the foregoing battery can achieve higher use safety. Referring to FIG. 2, in some embodiments, the electric device further includes a battery accommodating compartment 61 and an operation compartment 62. The battery accommodating compartment 61 is configured to accommodate the battery 51. The operation compartment 62 is separated from the battery accommodating compartment 61 through the support assembly. For the electric device including the operation compartment, the support assembly can serve as the box cover or bottom wall of the battery box to separate the battery accommodating compartment from the operation compartment, thereby improving the use safety of the electric device while reducing space occupied by the battery.

Although this disclosure has been described with reference to some preferred embodiments, various modifications to this disclosure and replacements of the components therein with equivalents can be made without departing from the scope of this disclosure. In particular, as long as there is no structural conflict, the various technical features mentioned in the embodiments can be combined in any manner. This disclosure is not limited to the specific embodiments disclosed in this specification, but includes all technical solutions falling within the scope of the claims.

## Claims

1. A support assembly, comprising:
at least two plate layers (20a, 20b, 20c), wherein the at least two plate layers (20a, 20b, 20c) are stacked, and a separating space (g1, g2) is provided between adjacent ones of the at least two plate layers (20a, 20b, 20c); and
a support structure (30) disposed in the separating space (g1, g2), wherein the support structure (30) comprises a plurality of cavities (31), at least some of the cavities (31) extend along a first direction (r1), and the first direction (r1) intersects with opposite surfaces (S1, S2) of the adjacent plate layers.

2. The support assembly according to claim 1, wherein the first direction (r1) perpendicularly intersects with the opposite surfaces (S1, S2) of the adjacent plate layers.

3. The support assembly according to claim 1, wherein the first direction (r1) intersects at an acute angle with the opposite surfaces (S1, S2) of the adjacent plate layers.

4. The support assembly according to claim 1, wherein the first direction (r1) intersects at an acute angle with one of the opposite surfaces (S1, S2) of the adjacent plate layers and perpendicularly intersects with the other one of the opposite surfaces (S1, S2) of the adjacent plate layers.

5. The support assembly according to any one of claims 1 to 4, wherein included angles Q at which the first direction (r1) intersects with the opposite surfaces (S1, S2) satisfy 75°≤Q≤90°.

6. The support assembly according to any one of claims 1 to 5, wherein the plurality of cavities (31) are spaced apart along one or more second directions (r2, r3) parallel to one of the opposite surfaces (S1, S2).

7. The support assembly according to any one of claims 1 to 6, wherein the support structure (30) is integrally formed.

8. The support assembly according to claim 7, wherein on a cross section parallel to one of the opposite surfaces (S1, S2), a minimum distance d between adjacent two of the plurality of cavities (31) is less than a maximum width W1 of a cross section of any one of the two adjacent cavities (31).

9. The support assembly according to claim 8, wherein the minimum distance d satisfies 0.5 mm≤d≤4 mm; and/or the maximum width W1 of the cross section satisfies 2.3 mm≤W1≤17.3 mm.

10. The support assembly according to any one of claims 7 to 9, wherein on a cross section parallel to one of the opposite surfaces (S1, S2), cross sections of at least some of the plurality of cavities (31) are all in an orthohexagnal shape and are the same in size.

11. The support assembly according to any one of claims 1 to 6, wherein the support structure (30) comprises a plurality of tubes (32); at least some of the plurality of tubes (32) are independently formed; and the plurality of cavities (31) comprises first cavities (311) enclosed by inner walls of all the tubes (32).

12. The support assembly according to claim 11, wherein the plurality of cavities (31) further comprise second cavities (312) enclosed by outer walls of adjacent ones of the plurality of tubes (32).

13. The support assembly according to claim 11 or 12, wherein on a cross section parallel to one of the opposite surfaces (S1, S2), a maximum width W2 of a cross section of the first cavity (311) is greater than a minimum wall thickness t of the tube (32).

14. The support assembly according to claim 13, wherein the maximum width W2 of the cross section satisfies 3 mm≤W2≤15 mm; and/or the minimum wall thickness t satisfies 0.5 mm≤t≤4 mm.

15. The support assembly according to any one of claims 11 to 14, wherein on a cross section parallel to one of the opposite surfaces (S1, S2), cross sections of at least some of the plurality of tubes (32) are all in a circular ring shape and are the same in size.

16. The support assembly according to any one of claims 1 to 15, wherein the opposite surfaces (S1, S2) of the adjacent plate layers each comprise a first region (G1) and a second region (G2), and the opposite surfaces (S1, S2) of the adjacent plate layers form the separating space (g1, g2) in the first regions (G1) and are attached to each other in the second regions (G2).

17. The support assembly according to claim 16, wherein the second region (G2) is located at an outer edge of the first region (G1) and encloses the first region (G1).

18. The support assembly according to claim 16, wherein a plurality of first regions (G1) are provided; the plurality of first regions (G1) are spaced apart; and an outer edge of each of the first regions (G1) is provided with the second region (G2).

19. The support assembly according to any one of claims 16 to 18, wherein in a stacking direction (z) of the at least two plate layers (20a, 20b, 20c), a portion, corresponding to the first region (G1), of an outer surface of at least one side of each of the at least two plate layers (20a, 20b, 20c) protrudes with respect to a portion corresponding to the second region (G2).

20. The support assembly according to any one of claims 1 to 19, wherein in a stacking direction (z) of the at least two plate layers (20a, 20b, 20c), an outer surface of at least one side of each of the at least two plate layers (20a, 20b, 20c) is flat.

21. The support assembly according to any one of claims 1 to 20, wherein at least some of the at least two plate layers (20a, 20b, 20c) are made of a metal material, and the support structure (30) is made of a metal material, such that the support structure (30) is able to be welded to at least one of the opposite surfaces (S1, S2) of the adjacent plate layers.

22. The support assembly according to any one of claims 1 to 20, wherein at least some of the at least two plate layers (20a, 20b, 20c) are made of a plastic material, and the support structure (30) is made of a plastic material, such that the support structure (30) is able to be hot-melt connected to at least one of the opposite surfaces (S1, S2) of the adjacent plate layers.

23. The support assembly according to any one of claims 1 to 22, further comprising:
a reinforcing layer (40) covering an outer surface of at least one side of each of the at least two plate layers (20a, 20b, 20c) in a stacking direction (z) of the at least two plate layers (20a, 20b, 20c).

24. A battery box (10), comprising the support assembly according to any one of claims 1 to 23;
wherein the support assembly is configured to form at least one wall of the battery box (10).

25. The battery box (10) according to claim 24, wherein the battery box (10) comprises:
a box body (11) comprising an accommodating groove; and
a box cover (12) disposed at an open end of the accommodating groove and configured to cover the accommodating groove;
wherein the support assembly is configured to form a bottom wall (111) of the box body (11).

26. The battery box (10) according to claim 25, wherein the box body (11) comprises a box frame (113); at least two plate layers (20a, 20b, 20c) in the support assembly are stacked to form a stack structure; and the stack structure comprises:
a first stacking region (L1), wherein the support structure (30) is provided between at least some adjacent plate layers in the first stacking region (L1); and
a second stacking region (L2), wherein all adjacent plate layers in the second stacking region (L2) are attached to each other in sequence along a stacking direction (z);
wherein the second stacking region (L2) is fixedly connected to the box frame (113).

27. The battery box (10) according to claim 26, wherein at least part of the second stacking region (L2) is welded to the box frame (113).

28. The battery box (10) according to claim 27, wherein at least part of the second stacking region (L2) is fixedly connected to a lower surface of the box frame (113) through friction stir welding.

29. The battery box (10) according to claim 26, wherein at least part of the second stacking region (L2) is fixedly connected to the box frame (113) through screws.

30. The battery box (10) according to claim 29, wherein at least part of the second stacking region (L2) is fixedly connected to a lower surface of the box frame (113) through flow drill screws (13).

31. The battery box (10) according to any one of claims 26 to 30, wherein the second stacking region (L2) comprises a plurality of outer edge regions (L21) at an outer edge of the support assembly and a connection region (L22) connected between the plurality of outer edge regions (L21) and separating the first stacking regions (L1); the plurality of outer edge regions (L21) and the box frame (113) are welded and/or fixedly connected through screws; and the connection region (L22) is fixedly connected to the box frame (113) through screws.

32. The battery box (10) according to claim 24, wherein the battery box (10) comprises:
a box body (11) comprising an accommodating groove; and
a box cover (12) disposed at an open end of the accommodating groove and configured to cover the accommodating groove;
wherein the support assembly is configured to form a side wall (112) of the box body (11).

33. The battery box (10) according to claim 24, wherein the battery box (10) comprises:
a box body (11) comprising an accommodating groove; and
a box cover (12) disposed at an open end of the accommodating groove and configured to cover the accommodating groove;
wherein the support assembly is configured to form the box cover (12).

34. A battery (50), comprising:
a battery cell (51); and
the battery box (10) according to any one of claims 24 to 33, configured to accommodate the battery cell (51).

35. An electric device, comprising:
the battery (50) according to claim 34, configured to supply electrical energy.

36. The electric device according to claim 35, further comprising:
a battery accommodating compartment (61) configured to accommodate the battery; and
an operation compartment (62) separated from the battery accommodating compartment (61) through the support assembly.
